# EUROPEAN PATENT SPECIFICATION

(11) **EP 1 079 033 B1**
(45) Date of publication and mention of the grant of the patent: **11.04.2007**
(21) Application number: 00307130.5
(22) Date of filing: 21.08.2000
(51) Int. Cl.: E03C 1/266, B02C 18/00

(54) **Waste water treatment system**
Abwasserbehandlungssystem
Système de traitement d'eaux usées

(30) Priority: 23.08.1999 JP 23586899
(43) Date of publication of application: 28.02.2001
(73) Proprietor: SANYO ELECTRIC CO., LTD., Moriguchi-shi, Osaka 570 (JP)
(72) Inventor: Fujimoto, Keiichi, Kato-gun, Hyogo-ken (JP); Takami, Hiroyuki, Kasai-shi, Hyogo-ken (JP)
(74) Representative: Murnane, Graham John

(56) References cited:
- DE-U- 9 111 155
- US-A- 5 127 587
- US-A- 5 971 303
- PATENT ABSTRACTS OF JAPAN vol. 013, no. 501 (C-652), 10 November 1989 (1989-11-10) -& JP 01 199687 A (HITACHI LTD;OTHERS: 01), 11 August 1989 (1989-08-11)

## Description

### FIELD OF THE INVENTION

The invention relates to a system for treating waste water from a crusher such as a disposer containing crushed garbage, allowing efficient waste water drainage to a sewage system.

### BACKGROUND OF THE INVENTION

A typical waste water treating system, known as all-volume type (or purification tank type), is disclosed in Japanese Patent Publication No. 9-155385 (C02F 3/30), which has a waste water treatment apparatus for processing waste water containing crushed garbage from a disposer as well as waste water directly from a sink not containing crushed garbage.

Another type of waste water processing system, as shown in Japanese Patent Publication No. 10-323657 (B09B 5/00), includes a motor driven switcher for channeling the waste water to a waste water treatment apparatus if the water comes from a disposer but otherwise channeling it directly to a sewage system.

The all-volume type waste water treatment apparatus, however, has a drawback in that it must have a volume as large as a purification tank, and therefore requires a large construction work to bury the tank in the ground, which is difficult to apply to existing houses.

On the other hand, some waste water treatment systems are designed to run a waste water treatment apparatus only when a disposer is optionally turned on by a user. In this case, waste water is passed to the waste water treatment apparatus by a water channel switcher which establishes connection between the disposer and the waste water treatment apparatus only when the disposer is in operation. This type of waste water treatment systems advantageously have much smaller dimensions. However, should a power failure occur when the switcher is channeling the waste water to the waste water treatment apparatus, the switcher would remain connected thereto even after the power failure, thereby causing ordinary waste water to flow into the waste water treatment apparatus, in excess of the treatment ability of the waste water treatment apparatus.

DE 9111155U describes a waste water treatment system including a water channel switcher connected to a line for passing there through waste water from a kitchen sink and garbage-containing water from a garbage crusher, and is adapted to channel said garbage-containing water to a waste water treatment apparatus when said garbage crusher is energized but otherwise channel said waste water from the sink to a sewage line wherein said water channel switcher is energized and de-energized as said garbage crusher is energized and de-energized, respectively, wherein said water channel switcher has a return mechanism for forcing said water channel switcher so as to channel said waste water to said sewage line when said switcher is de-energized.

US 5127587 describes a waste water treatment system including a spin chamber connected with a kitchen disposer-grinder for de-watering and collecting ground food scraps suitable for use as garden compost. A diverter valve operated by a manual knob controls the discharge of water and solid material from the disposer-grinder selectively through the spin chamber or through a drainpipe to a sewage line.

JP 01199687 describes a garbage treatment device including a garbage crusher which is connected with a drain outlet of a sink and a garbage treatment tank connected to an outlet of the crusher. A bypass pipe is provided from the crusher to a drainpipe. A selector valve is provided so that the inlet of the treatment tank and the inlet of the bypass pipe can be selectively opened and closed such that garbage is only directed to the treatment tank when garbage treatment is needed.

### SUMMARY OF THE INVENTION

In view of foregoing problems encountered in prior art waste water treatment systems, the invention aims to provide a small sized waste water treatment system which is equipped with a water channel switcher and capable of successfully continuing its operation and preventing such overflow as mentioned above even under a power failure.

According to the one aspect of the present invention there is provided A waste water treatment system including a water channel switcher connected to a line for passing therethrough waste water from a kitchen sink and garbage-containing water from a garbage crusher, and is adapted to channel said garbage-containing water to a waste water treatment apparatus (4) when said garbage crusher is energized but otherwise channel said waste water from the sink to a sewage line wherein
said water channel switcher is energized and de-energized as said garbage crusher is energized and de-energized, respectively, wherein
said water channel switch has a return mechanism for forcing said water channel switcher so as to channel said waste water to said sewage line when said switcher is de-energized;
said water channel switcher comprising a casing having at the upper end thereof an inlet for receiving said waste water, and at one end of the bottom of said casing a sewage outlet, and at the other end of the bottom of said casing a water treatment outlet;
a pivotal louver mounted between said outlets for switching the flow of said waste water to either of said sewage outlet or said waste water treatment outlet;
electric means for driving said louver so as to channel said waste water to said waste water treatment outlet;
characterised in that said louver has side walls provided on the opposite ends of said louver and extending along the inside of said casing.

Such side walls of the louver will prevent the waste water from directly hitting the inner surface of the casing, thereby preventing deposition of garbage on the inner surface of the casing.

A waste water treatment system of the invention has a supplementary return mechanism added to an electric switching means for controlling said water channel switcher which is adapted to switch a water channel leading to a sewage line to a water channel leading to a line connected to a waste water treatment apparatus when said garbage crusher is in operation, said supplementary return mechanism adapted to force said water channel switcher to restore said water channel leading to a said sewage line if said electric switching means is de-energized.

With this return mechanism, should power failure occur, the switcher will be automatically returned to the home position at which the sink drain is channelled to the sewage system to prevent an excessive flow of water into the waste water treatment apparatus, hence preventing degradation of performance of the waste water treatment apparatus.

This return mechanism utilizes the restoring force of a spring in returning the water channel switcher to the home position, thereby directing the flow of waste water to the sewage line when the motor is de-energized.

The water channel switcher may be provided at the upper end of the casing with a joint pipe mounted on the inlet of the switcher for directing, via the open end thereof, incoming waste water to the waste water treatment line formed in the bottom of the casing.

With the joint pipe installed, waste water containing crushed garbage is directed naturally to the waste water treatment line, preventing the crushed garbage from hitting the inner walls of the casing and from depositing inside the casing.

The right and left sections of the casing preferably having mating flanges so that they can be coupled together to form water tight seal for the casing.

The louver is preferably pivotally mounted in the casing by a pivot provided at the lower end of the louver such that the pivot is supported by bearings provided inside the casing and covered with a spoiler covering the bearings.

In this arrangement, infiltration of waste water, and hence of crushed garbage, into the bearings will be prevented.

The lower end of the louver may be extended downwardly over the pivot and the bearings to prevent crushed garbage from entering the bearings and depositing therein.

A separator formed of a resilient material may be provided between the two outlets, extending over the louver and between the side walls of the louver and the casing.

The soft separator will be useful to prevent damaging the louver with crushed garbage pieces, which deposit on the side walls and the upper end of the louver and get caught between the louver walls and the separator.

It is preferable to further provide a manually operable switching mechanism to the switcher so that, should the return mechanism mentioned above fail, the manually operable switching mechanism will take over switching operation.

### BRIEF DESCRIPTION OF THE DRAWINGS

The invention will now be described in detail with reference to the accompanying drawings, with like reference numerals referring to like or corresponding elements throughout the drawings, in which:
Fig. 1 is a block diagram showing a basic structure of a waste water treatment system utilizing a disposer according to the invention;
Fig. 2 shows details of a waste water treatment apparatus for use in the waste water treatment system of Fig. 1;
Fig. 3 is a perspective view of a first exemplary water channel switcher for use with the waste water treatment apparatus of Fig. 2.
Fi.4 is a schematic view of a geared motor for use in the water channel switcher, showing the front view (Fig. 4A) and a rear view (Figs. 4B and 4C) of the motor;
Fig. 5 is a transverse cross section of the water channel switcher, useful in understanding the operations of the switcher, in one case (Fig. 5A) where the disposer is not in operation while draining the waste water from a kitchen sink, and another case (Fig. 5B) where the disposer is in operation discharging waste water containing crushed garbage;
Fig. 6 shows side elevations of the water channel switcher, illustrating a manually operable return mechanism for use during malfunction of the automatic return mechanism of the water channel switcher, in one case (Fig. 6A) where the spring of the automatic return mechanism is broken while the waste water is channelled to the waste water treatment apparatus, and in another case (Fig. 6B) where the switcher has been manually returned to its home position channelling the waste water to the sewage system;
Fig. 7 is a cross sectional representation of a separator for use in the water channel switcher, showing a side elevation (Fig. 7A) and a cross section (Fig. 7B) taken along line A-A of Fig. 7A;
Fig. 8 is a cross section of a major portion of a second water channel switcher;
Fig. 9 is a schematic view of the second water channel switcher as seen in the direction of arrow B of Fig.8;
Fig. 10 illustrates the arrangement of a geared motor for use in the water channel switcher of Fig. 9, also showing functions of the geared motor during a power failure (Fig. 10A) and during a normal operation (Fig. 10B);
Fig. 11 is a cross section of the second water channel switcher taken along line C-C of Fig. 8, where the switcher is switched to channel the waste water to the sewage pipe;
Fig.12 is a also a cross section of the second water channel switcher taken along line C-C of Fig. 8, where the switcher is switched to channel the waste water to the waste water treatment apparatus; and
Fig. 13 is a schematic view of a further water channel switcher.

### DETAILED DESCRIPTION OF THE PREFERRED EMBODIMENT

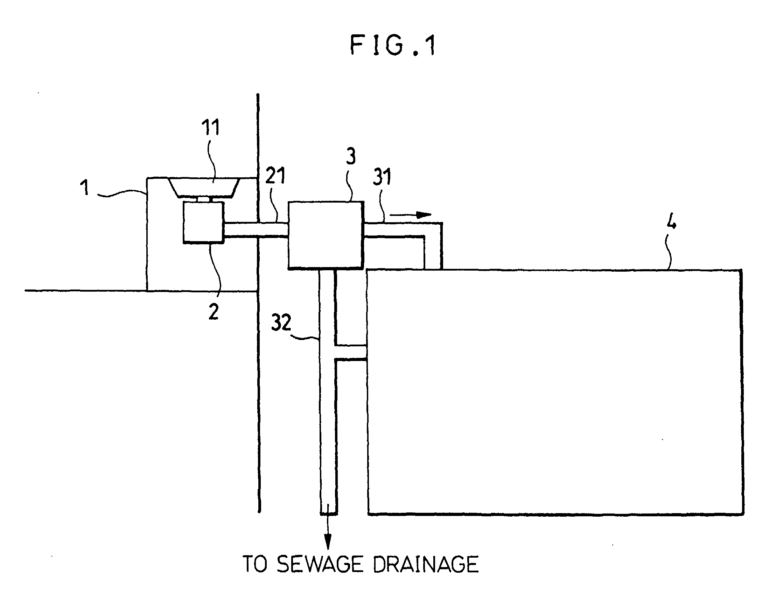

Referring now to Fig. 1, there is shown a waste water treatment system including a disposer 2 connected to a sink 11 of a kitchen sink unit 1, a water channel switcher 3 for switching water channels between a waste water line 21 of the disposer 2 and a first line (referred to as waste water treatment line) 31 which is in turn connected to a waste water treatment apparatus 4 and a second line (referred to as sewage line) 32 leading to a sewage system. When the disposer is in use, a channel is established between the line 21 and the line 31, and otherwise a channel is established between the line 21 and the line 32. The waste water treatment apparatus. 4 has a drain pipe which merges to the sewage line 32.

The waste water containing crushed garbage generated by the disposer is normally lead to the waste water treatment apparatus 4 by the water channel switcher 3 for separating the garbage and water, and the water thus recovered by the apparatus 4 is discharged to the sewage line 32. On the other hand, ordinary waste water not containing garbage materials will be channeled directly to the sewage system through the sewage line 32.

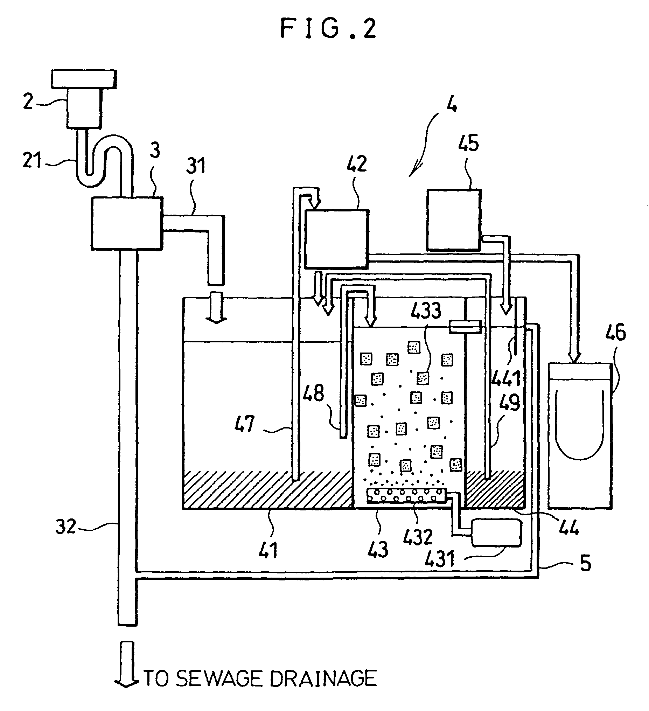

The waste water treatment apparatus 4, shown in Fig. 2, consists of: a flow regulation tank 41 which receives waste water containing crushed garbage from the disposer via the water channel switcher 3; a solid-liquid separator 42 for separating from the waste water precipitated solid materials; a treatment tank 43 for treating the supernatant water sent from the flow regulation tank 41; a precipitate separation tank 44 for precipitating the sludge which was formed in the treatment tank 43; a coagulant injector 45 for injecting coagulant into the supernatant in the precipitate separation tank 44; a compost tank 46 for separating solid components which precipitate in the solid-liquid separator 42; and air lift pumps 47, 48, and 49 for transporting fluid to and from the tanks.

The air lift pumps are a type of tubes adapted to transport materials floating in the fluid within the tube by the lift of air bubbles injected into the tube. Although each of the air lift pumps 47, 48, and 49 of Fig. 2 is schematically shown by a simple thick arrow, it actually consists of an air lift pipe and a blower pump. The blower pumps may be replaced by a common blower pump which has a multi-directional valve for switching different pipes.

Inserted in the flow regulation tank 41 are the air lift pump 47 for lifting precipitate in the flow regulation tank 41 to the solid-liquid separator 42, and the air lift pump 48 for lifting the supernatant in the flow regulation tank 41 to the treatment tank 43. The solid-liquid separator 42 can be a filtering mesh, for example.

On the other hand, the treatment tank 43 may be a tank for treating organic materials by microaerophilic bacteria in a well known process such as for example an activated sludge process, a contact aeration process, and a carrier fluidized bed process. The treatment tank 43 is ventilated by a blower pump 431 and an air diffuser 432. The treatment tank 43 shown in Fig. 2 is a carrier fluidized bed type treatment tank in which carriers 433 carrying thereon inhabiting microaerophilic bacteria are circulated.

Ordinary waste water of kitchen, i.e. waste water drained from the kitchen sink without using the disposer, is passed to the water channel switcher 3 and then discharged to the sewage line 32.

On the other hand, when the disposer is in operation, the water channel switcher 3 is switched so that waste water is channeled to the flow regulation tank 41 through the line 31 to thereby treating crushed garbage in the waste water.

A mixture of solids and water in the flow regulation tank 41 is pumped up to the solid-liquid separator 42 by an air lift pump 47, where water is separated from solids. The water separated by the solid-liquid separator 42 is returned to the flow regulation tank 41, and the solids are deposited in the compost tank 46. The supernatant in the flow regulation tank 41 is transported to the treatment tank 43 by an air lift pump 48.

In the treatment tank 43, organic materials are decomposed by the microaerophilic bacteria. Sludge formed in the treatment tank 43 and are overflown into the precipitate separation tank 44, where it is coagulated, precipitating on the bottom. The supernatant of the treated water in the tank 44 is discharged into the sewage line 32 through the drain pipe 5. Provided at the upper section of the precipitate separation tank 44 is a partition board 441 for preventing direct discharge of sludgy water from the treatment tank 43 into the precipitate separation tank 44 as the sludge is overflown into the tank 43.

Precipitating sludge in the precipitate separation tank 44 is removed therefrom back to the flow regulation tank 41 by the air lift pump 49. The sludge transferred to the flow regulation tank 41 is again mixed with fresh crushed garbage from the disposer 2 and sent to the solid-liquid separator 42 by the air lift pump 47 for further separation of water and solids.

Solid components collected in the compost tank 46 is decomposed by the bacteria accommodated on, and incubated by, wooden chips in the compost tank 46, and turned to a compost heap, which is later collected as a fertilizer.

Operations of the entire waste water treatment system will now be described. The sequence of the operations may be automated by a controller which includes a microcomputer. The sequence, however, is not a part of the invention that it is not shown in drawings.

At the beginning of the operation, a user confirms on a control panel (not shown) adjacent the sink unit 1 that the disposer 2 can be operated, throw garbage into the disposer 2, and then turn on the switch on the control panel.

The throwing of the switch will cause the water channel switcher 3 to establish a channel between the disposer and the waste water treatment apparatus 4 before the disposer 2 is started. Subsequently the disposer 2 will be started, crushing the garbage, which will be transported into the flow regulation tank 41 as described above.

Solid components in the sludge will precipitate in the flow regulation tank 41 in about half an hour. The supernatant in the flow regulation tank 41 is pumped to the treatment tank 43 by the air lift pump 48. Supernatant overflowing the treatment tank 43 enters the precipitate separation tank 44. On the other hand, the sludge accumulating in the precipitate separation tank 44 will be returned to the flow regulation tank 41 by an air lift pump 49.

In the solid-liquid separator 42, solid components are separated from liquid components and transferred to the compost tank 46, while the liquid components are returned to the flow regulation tank 41.

The above sequence of operations will be repeated once in every 30 minutes, to thereby gradually treating crushed garbage stored in the flow regulation tank 41.

The compost tank 46 contains bacteria carriers in the form of wooden chips, as described previously, to promote decomposition of organic materials in the solids. The compost tank 46 is provided with a stirrer to stir the content at a regular interval.

In the treatment tank 43, organic materials conveyed by the supernatant from the flow regulation tank 41 are decomposed by the bacteria. Overflowing supernatant in the treatment tank 43 is passed to the precipitate separation tank 44. The treatment tank 43 accommodates porous carriers 433 which helps maintain a desirable biological environment for the bacteria. The porous carriers 433 are put into circulation in the tank 43 by air bubbles generated by an air diffuser 432 which spout the air supplied by the blower pump 431. The organic materials thus decomposed into sludge in the treatment tank 43 are sent to the precipitate separation tank 44 and precipitate therein, which precipitate is then returned to the flow regulation tank 41 by the air lift pump 49. The precipitate is later recovered in the solid-liquid separator 42 together with solids garbage and sent to the compost tank 46 for further decomposition. The precipitate will be changed to compost.

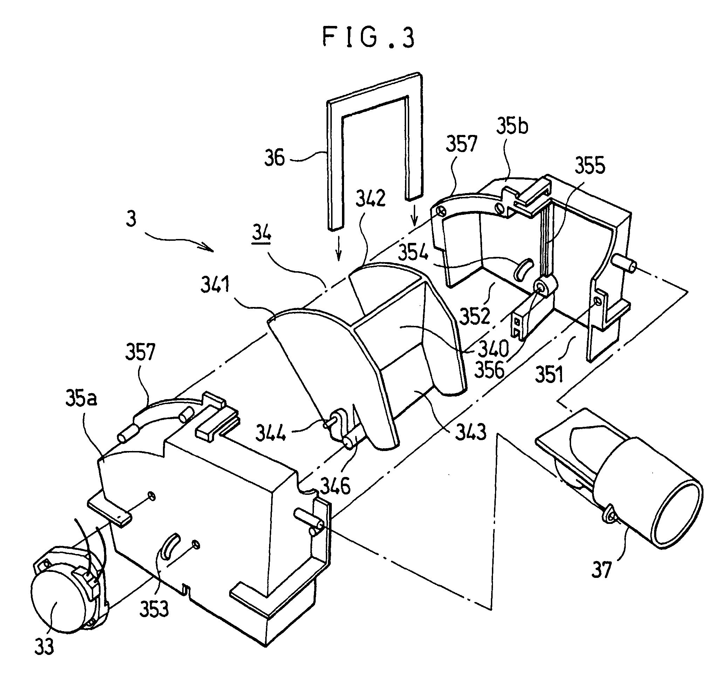

Referring now to Fig. 3, the water channel switcher 3 of the invention will be described in detail below.

The water channel switcher 3 has a louver 34 which is driven by a geared motor 33. The louver 34 is pivotally mounted between a right and a left casing 35a and 35b, respectively, forming together the casing of the water channel switcher 3, with a separator 36 interposing between the louver 34 and the casing. Formed in the upper end of the water channel switcher 3 are an waste water inlet connected to the waste water line 21 extending from the disposer 2 and a joint pipe 37 connected to the waste water inlet. The water channel switcher 3 has a sewage outlet 351 formed in one corner of the bottom of the water channel switcher 3 for discharging waste water into the sewage line 32 and another outlet 352 (referred to as waste water treatment outlet) formed on the other corner of the bottom for discharging garbage containing water to the waste water treatment line 31 connected to the waste water treatment apparatus 4.

The louver 34 is pivotally mounted between the outlets 351 and 352. The louver 34 has louver walls 341 and 342 on the opposite sides of a partition wall 340. An inclined spoiler 343 extends from the middle of the partition wall 340 towards the outlet 351. Also formed at the opposite lower sections of the louver walls 341 and 342 are louver drive pins 344 and 345. A pivot 346 is formed on the partition wall 340 and on the same side of the partition wall 340 as the spoiler 343.

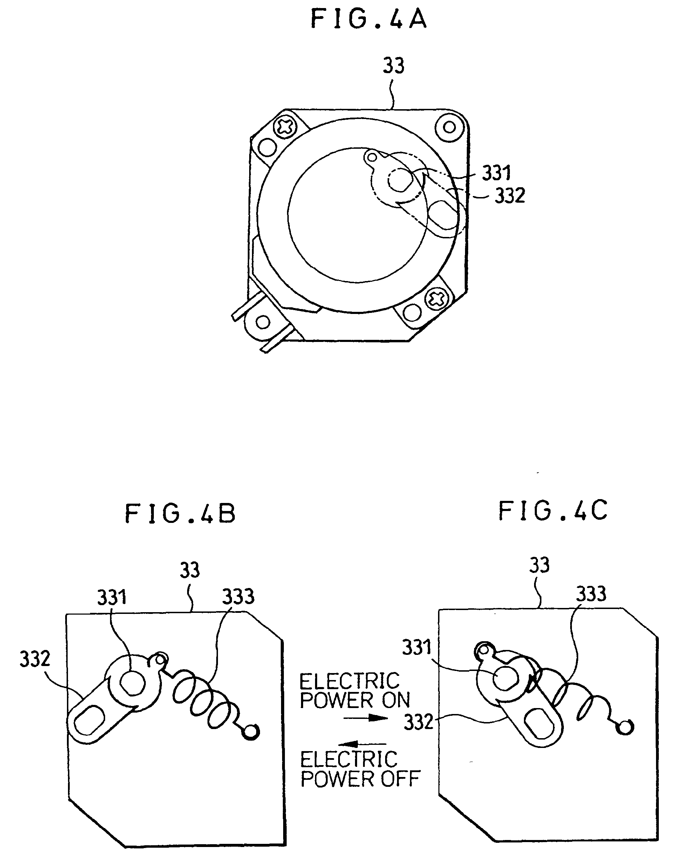

Fig. 4 illustrates an arrangement of the geared motor 33 as viewed from the front (Fig. 4A) and from the rear (Figs. 4B and 4C) of the motor 33, showing the mechanism of the geared motor 33. The geared motor 33 has a reduction gear and an electromagnetic clutch housed in a motor casing, and a motor shaft 331 extending through the rear end of the casing. A rod 332 is mounted on the extended end of the shaft 331. Hooked at the remote end of the rod from the shaft 331 is a spring 333. The spring is secured at the opposite end thereof to a point on the rear of the motor casing.

The geared motor 33 is positioned initially at its home position as shown in Figs. 4A and 4B when it is not energized. As it is switched on, the rod 332 mounted on the shaft 331 is rotated in the counterclockwise direction, stretching the spring 333, until the rod 332 turns on the electromagnetic clutch to hold the rod 332 at the position as shown in Fig. 4C.

If the geared motor 33 is de-energized, the built-in electromagnetic clutch is turned off, so that the rod 332 is rotated in the clockwise direction by the restoring force of the spring 333, returning to the initial or home position shown in Fig. 4B.

If the electric power to the geared motor 33 is cut off due to power failure for example while the rod is half way between the home position shown in Fig. 4B and the final position shown in Fig. 4C, the rod will be returned to the home position by the spring in the same manner as described above.

The geared motor 33 is secured on the outer surface of the left casing 35a by means of appropriate fastening means such as screws, as shown in Fig. 3, such that the louver drive pin 344 penetrates the louver drive pin bores 353 formed on the left casing 35a and fits in the rod 332.

Formed in the right and left casings 35a and 35b are louver drive pin bores 353 and 354, grooves 355 for receiving therein the separator 36, and sleeve bearings 356 for receiving therein pivot 346 of the louver 34.

The separator 36 has an inverted U-shape. It is formed of a resilient, chemically and thermally stable material such as silicon rubber.

The separator 36 is fitted in the grooves 355 of the right and the left casings 35a and 35b, respectively, by first placing the separator on both sides 341 and 342 of the louver 34 from above and next securing together outer flanges 357 of the right and the left casings 35a and 35b, respectively, by screws. At the same time, the pivot 346 of the louver 34 is fitted in the sleeve bearings 356 formed on the right and the left casings 35a and 35b, respectively. Next, the joint pipe 37 is secured on the inlet formed in the upper corner of the right and the left casings 35a and 35b, respectively. The joint pipe 37 has a bent section which is inclined downwardly into the casings.

It is noted that the outer flanges 357 of the right and the left casings 35a and 35b, respectively, are sealably coupled to prevent leakage of water from the casing.

The joint pipe 37 is connected to the waste water line 21 to receive from the disposer 2 waste water containing crushed garbage when the disposer is in operation, but otherwise receives ordinary waste water from the sink.

The water channel switcher assembly 3 works as follows.

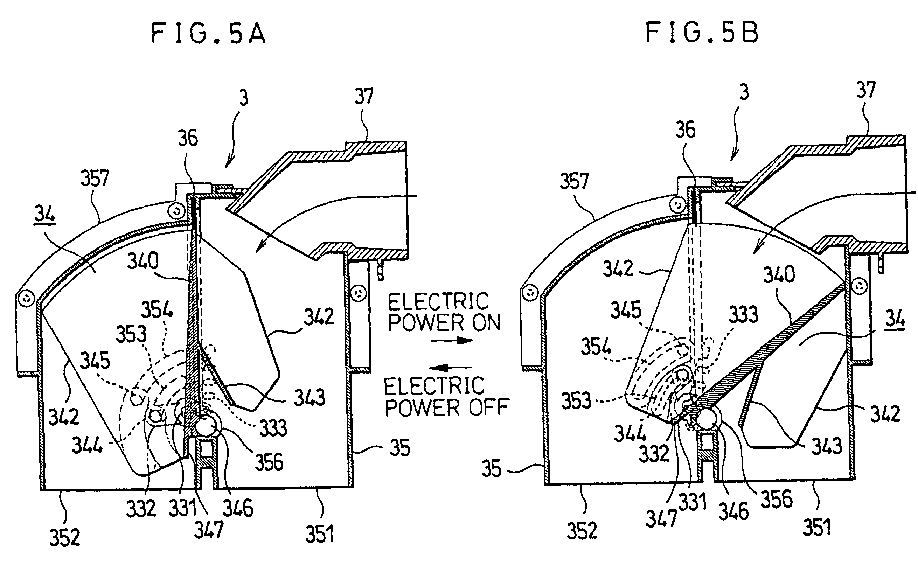

Fig. 5A shows the condition of the water channel switcher 3 when the disposer 2 is not in operation.

In this initial condition, since the rod 332 is at the home position, the louver drive pins 344 and 345 extending through the louver drive pin bores 353 and 354 are held to the position as shown in Fig. 5A with the partition wall 340 of the louver 34 aligned with the separator 36. Ordinary waste water from the kitchen sink enters the water channel switcher 3 through the joint pipe 37, pours into the louver 34, and falls into the outlet 351. It is seen that, because of the protective louver side walls 341 and 342, the waste water will not impinges directly on the inner surfaces of the right and the left casings 35a and 35b, thereby preventing deposition of waste materials on the inside of the casings.

The spoiler 343 prevents the waste water from reaching the spaces between the pivot 346 and the sleeve bearings 356, thereby preventing accumulation of garbage therein, and also preventing leak of the waste water to the garbage treatment outlet 352.

Fig. 5B shows a condition of the water channel switcher 3 when the disposer 2 is in operation so that the water channel switcher 3 receives crushed garbage through the joint pipe 37.

When the disposer 2 is in operation, the geared motor 33 is energized to bring the louver drive pins 344 and 345 to the position shown in Fig. 5B, so that the partition wall 340 of the louver 34 is inclined past the mouth of the joint pipe 37 as shown. Waste water containing crushed garbage flowing into the water channel switcher 3 through the joint pipe 37 will fall into the outlet 352 through the upper section of the louver 34, leaving little or no garbage on the inner walls of the casing. As the flow of the water containing garbage is reduced, it tends to drop and flow on the partition wall 340 of the louver 34. In this case too, the right and the left walls 341 and 342 help prevent deposition of crushed garbage on the casing.

Deposition of crushed garbage and leak of waste water into the bearings 356 and the sewage line 351 may be further prevented by an overlapping section 347 formed at the lower end of the louver 34 to extend over the sleeve bearings 356.

Should power failure occur while the louver 34 is in operation at the position shown in Fig. 5B, or halfway from the home position shown in Fig. 5A to the position shown in Fig. 5B, the louver 34 would be instantly returned to the home position as described previously, thereby securing a sewage channel for the ordinary waste water from the kitchen sink. Accordingly, in such cases as discussed above, an excessive flow of waste water into the waste water treatment apparatus 4 will not occur and no degradation of treatment power of the waste water treatment apparatus take place.

Incidentally, one might think that the louver 34 will not be able to return from the working condition shown in Fig. 5B to the home position shown in Fig. 5A if the spring 333 is broken by accident for example.

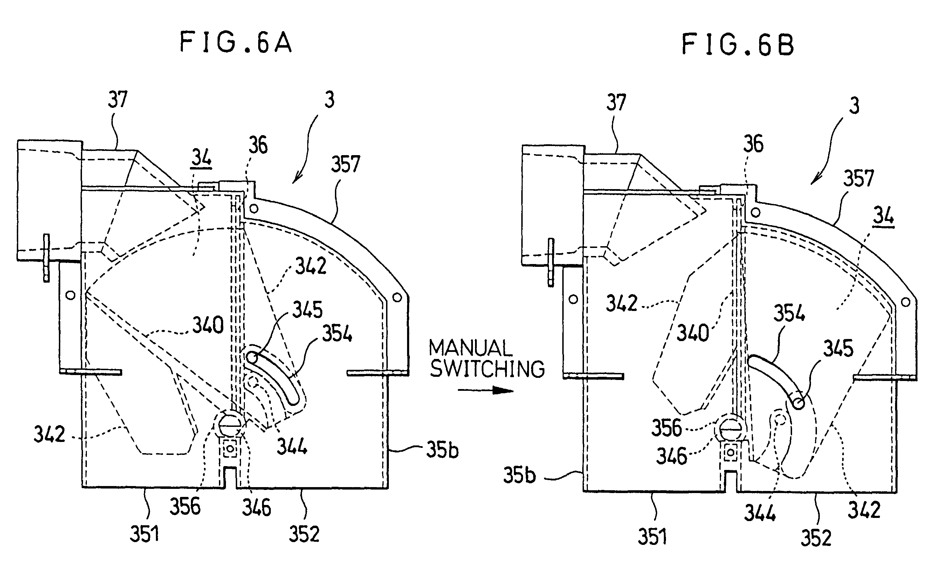

Fig. 6A shows an instance where the spring 333 is broken while the louver 34 remains at the working position, receiving an excessive amount of waste water from the disposer 2, and directing the water to the waste water treatment outlet 352. Therefore, it is likely that the waste water treatment apparatus will eventually loose its ability by the excessive charging of the waste water.

To circumvent such accident, the louver drive pin 345 shown in Fig. 6A may be extended through the pin bore 354 and through the right casing 35b so that the extended louver drive pin may be manually operated to bring the louver 34 back to the home position shown in Fig. 6B. The extended louver drive pin 345 may have a larger rotational radius about the pivot 356 than the drive pin 344 for ease of the manual operation of the louver drive pin 345. When the tension of the spring 333 is not available as shown in Fig. 6, it is possible for the louver 34 to have either one of the two positions shown in Fig. 6A and Fig. 6B due to the offset gravitational center of the louver walls 341 and 342. Thus, once the louver 34 is manually moved to the home position as shown in Fig. 6B, it remains there.

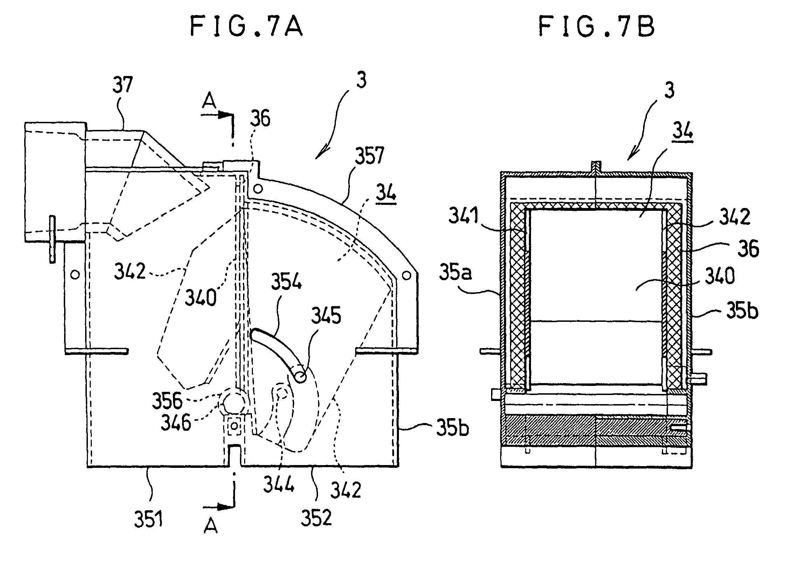

Fig. 7B shows the cross section of the louver taken along line A-A of Fig. 7A. The separator 36 may be formed of a resilient material to abut on the upper end and on the opposite sides of the louver 34 as shown in Fig. 7B, so that, if crushed garbage deposits on the upper end and the side walls, it could be scraped off by the separator 36. If not scraped off and trapped between them, the garbage will not damage the louver 34.

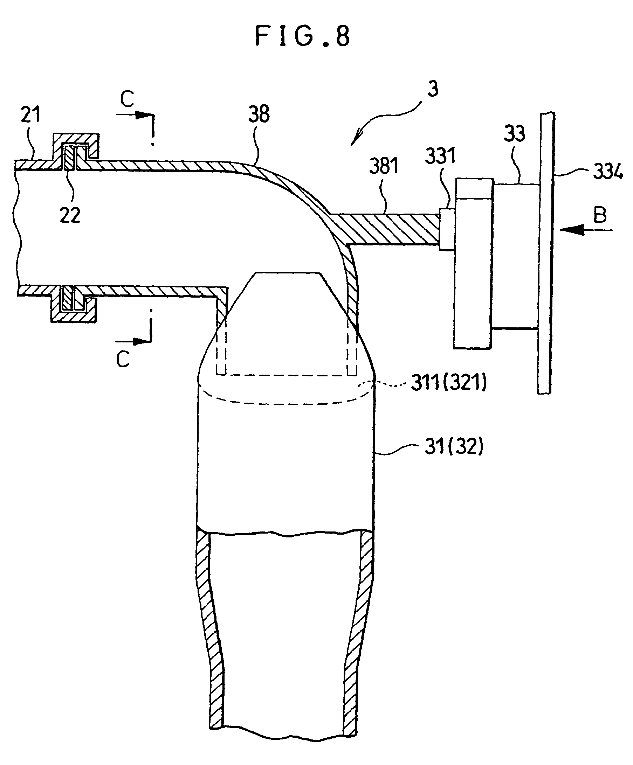

Figs. 8 through 12 show details of another type of water channel switcher 3.

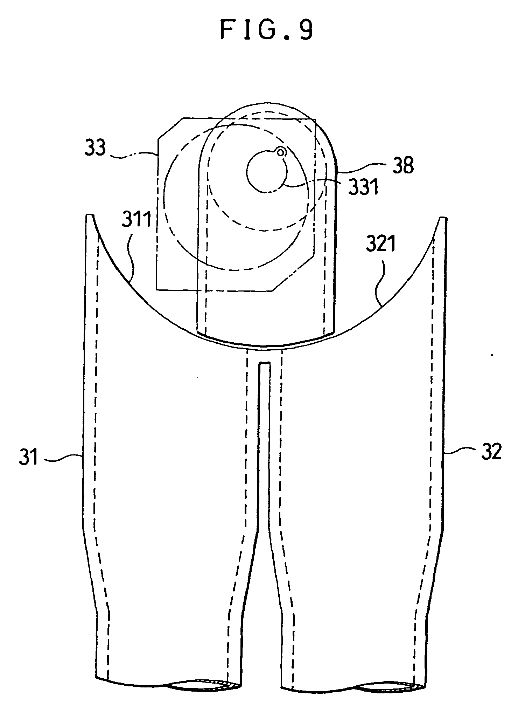

In this example, a water channel switcher 3 is provided with a rotatable elbow 38 connected, via a seal member 22, to the waste water line 21 extending from the disposer 2. Formed on the elbow 38 is a pivot 381 which is coaxial with the waste water line 21 and connected with the motor shaft 331 of the geared motor 33 mounted on a stay 334. The elbow pipe 38 has a convexed open end seating on two concabed mouths, that is, the sewage outlet 311 and the waste water treatment outlet 321, both having the same radius of curvature as the open end of the elbow 38, as shown in Fig. 9. The two outlets 311 and 321 are led to the waste water treatment line 31 connected to the waste water treatment apparatus 4 and to the sewage line 32 connected to the sewage line.

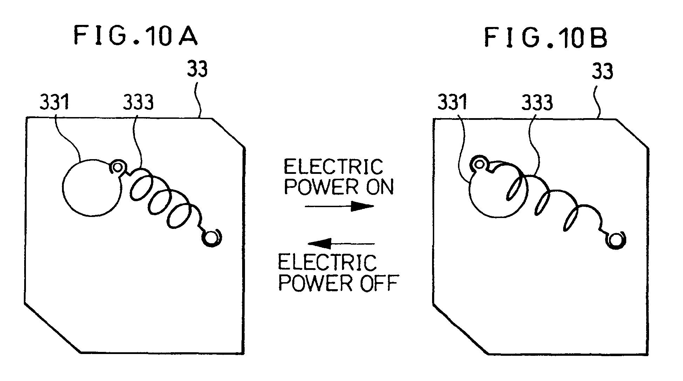

The geared motor 33 may be the same as the one used in the foregoing example, but the shaft of the motor is directly coupled with the pivot 381 of the elbow pipe 38. In addition, the motor shaft 331 is coupled at one peripheral point thereof with a spring as shown in Fig. 10. The opposite end of the spring is secured to a point on the motor casing.

It can be seen from Figs. 10A and 10B that the geared motor 33 operates in substantially the same manner as described previously in conjunction with Figs. 4A-C. That is, when the geared motor 33 is energized, the motor shaft 331 is rotated in the counter clockwise direction from the home position shown in Fig. 10A, stretching the spring 333, until it reaches a position shown in Fig. 10B to turn on a built-in electromagnetic clutch, which holds the shaft 331 at that position.

When the geared motor 33 is de-energized, and so is the electromagnetic clutch, the shaft 331, and hence the elbow pipe 38, is rotated in the clockwise direction under the restoring force of the spring 333, bringing the motor shaft 331 back to the home position. If the electric power to the geared motor 33 is cut off during a transition from the home position of Fig. 10A to the position of Fig. 10B, the shaft 331 will be returned to the home position in the same manner.

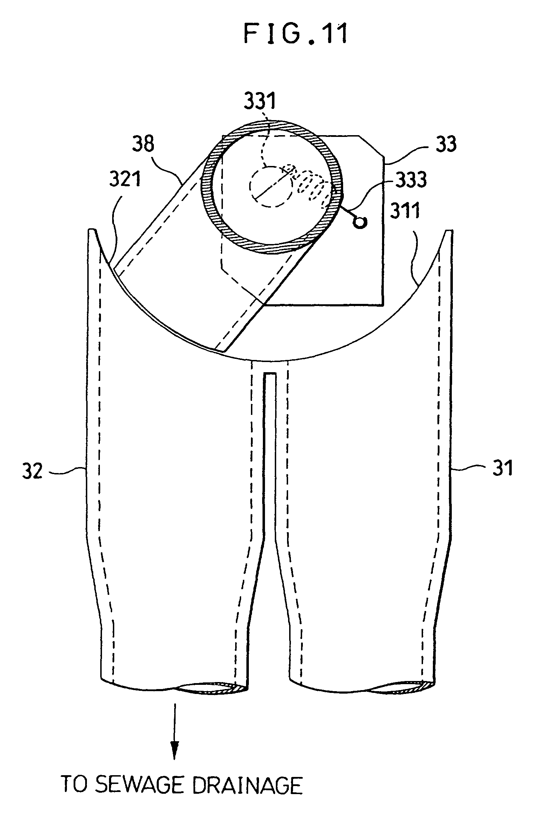

When the geared motor 33 is at the home position of Fig. 10A, the elbow pipe 38 connected with the pivot 381 stays at the position as shown in Fig. 11, allowing the waste water coming from the kitchen sink to flow through the elbow pipe 38 and into the sewage line 32 via the sewage outlet 321.

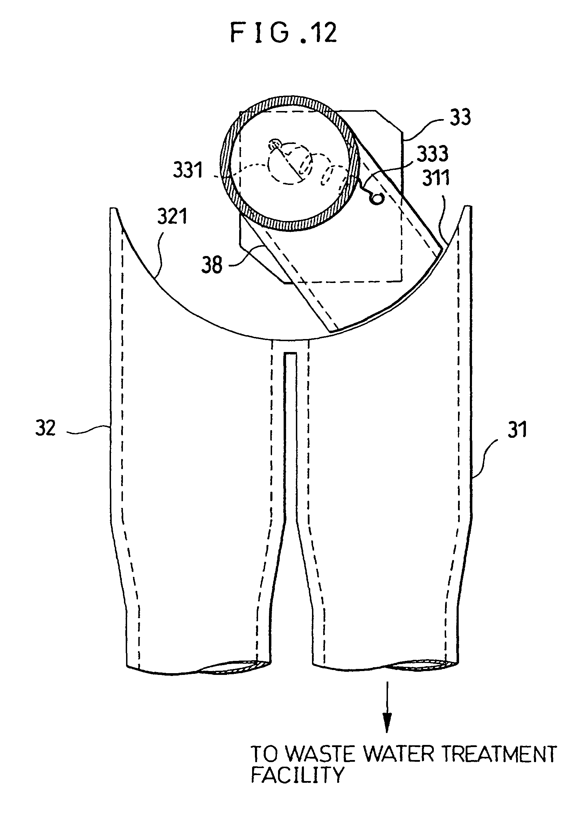

When the geared motor 33 is energized so that the shaft 331 is held at the final position shown in Fig. 10B, the elbow pipe 38 is held at the position shown in Fig. 12, allowing waste water containing crushed garbage from the disposer 2 to flow through the elbow pipe 38 into the line 31 via the outlet 311 and further into the waste water treatment apparatus 4 for treatment of the garbage.

When a power failure takes place, the geared motor 33 is returned to the home position shown in Fig. 10A, thereby bringing the elbow pipe 38 to its home position shown in Fig. 11 to channel the waste water from the kitchen sink to the sewage system.

Accordingly, as in the previous example, excessive loading of the waste water treatment apparatus 4 with waste water and resultant loss of treatment ability thereof will be avoided during the power failure.

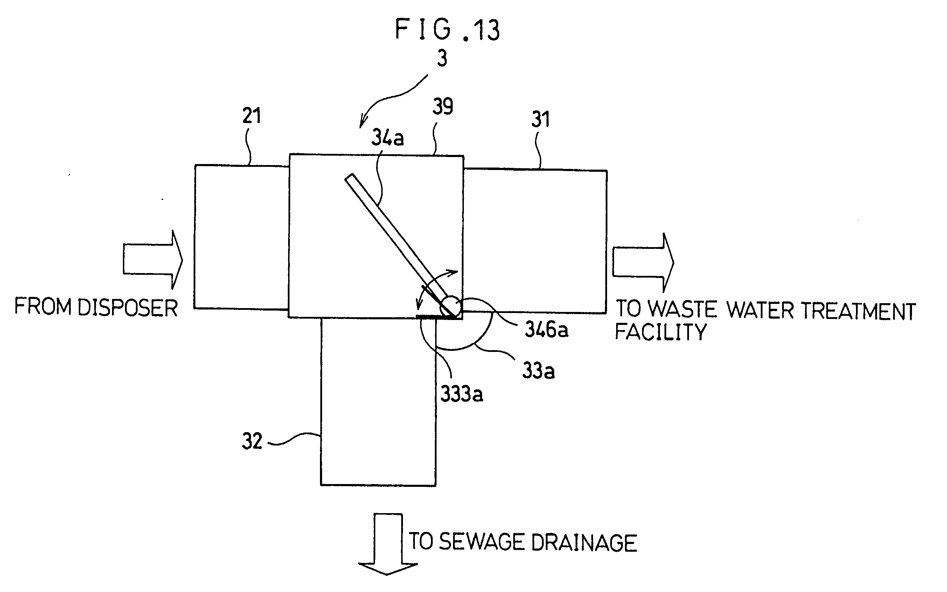

Fig. 13 shows a further example of water channel switcher 3, in which the channel switcher 3 is provided with a branching section 39 having a pivotal switching board 34a for branching the flow of water. At a first position of the switching board 34a, the waste water from the line 21 is channeled to the waste water treatment line 31 connected to the waste water treatment apparatus 4 and at a second position, channeled to the sewage line 32 connected to the sewage system. The switching board 34a has a pivot 346a which is always urged in one direction by a torsion spring 333a mounted on the pivot 346a so as to shut off the water channel to the line 31 connected to the waste water treatment apparatus 4. The pivot 346a is connected with a rotary solenoid 33a which, when energized, rotates the switching board 34a against the torsional force of the spring 333a to shut off the water channel to the sewage line 32 connected to the sewage system.

When the disposer 2 is in operation, the rotary solenoid 33a is turned on to rotate the switching board 34a to shut off the channel to the sewage pipe 32.

When the disposer 2 is not in operation, the rotary solenoid 33a is also de-energized (including cases of power failure), so that the torsional force of the spring 333a will shut off the water passage to the waste water treatment apparatus 4.

Accordingly, as in the foregoing examples, excessive loading of the waste water treatment apparatus 4 with waste water and resultant loss of treatment ability thereof will be avoided even under a power failure.

Although the invention has been described with particular reference to certain preferred embodiments thereof, variations and modifications of the present invention can be effected within the scope of the invention. For example, the disposer may be appropriately substituted for by another type of crusher such as a meat grinder.

The waste water treatment apparatus is not limited to the one shown in Fig. 2: it can be any such compact apparatus. For example, unlike the example described in conjunction with Fig. 2 in which the precipitates are air lifted from the flow regulation tank 41 to the solid-liquid separator 42 to separate the water from the solids, with the water fed back to the flow regulation tank 41, the precipitate in the flow regulation tank 41 may be alternatively air lifted to the solid-liquid separator 42, and the fluid components discharged into the treatment tank 43.

An additional tank may be optionally provided, between the kitchen sink and the flow regulation tank 41, for storing waste water from the kitchen sink and transferring only concentrated waste water from the tank to the flow regulation tank 41 and discharge the overflowing supernatant to the sewage line 32.

## Claims

1. A waste water treatment system including a garbage crusher (2) and a water channel switcher (3) connected to a line (21) for passing therethrough waste water from a kitchen sink (11) and garbage-containing water from a garbage crusher (2), and is adapted to channel said garbage-containing water to a waste water treatment apparatus (4) when said garbage crusher (2) is energized but otherwise channel said waste water from the sink to a sewage line (32) wherein
said water channel switcher (3) is energized and de-energized as said garbage crusher (2) is energized and de-energized, respectively, wherein
said water channel switcher (3) has a return mechanism (33) for forcing said water channel switcher so as to channel said waste water to said sewage line when said switcher (3) is de-energized;
said water channel switcher (3) comprising a casing (35a,35b) having at the upper end thereof an inlet for receiving said waste water, and at one end of the bottom of said casing a sewage outlet (351), and at the other end of the bottom of said casing a water treatment outlet (352);
a pivotal louver (34) mounted between said outlets for switching the flow of said waste
water to either of said sewage outlet or said waste water treatment outlet;
electric means (33) for driving said louver so as to channel said waste water to said waste water treatment outlet;
**characterised in that** said louver (34) has side walls (341,342) provided on the opposite ends of said louver and extending along the inside of said casing.

2. The waste water treatment system as set fourth in claim 1, wherein said casing is formed of a right and a left casings each having a flange (357), said flanges coupled together to integrate said right and left casings.

3. The waste water treatment system as set forth in any preceding claim, wherein said louver (34) has a pivot (346) at the lower end thereof supported in bearings formed on the walls of said casing; and
a spoiler (343) is formed on said louver (34) covering said pivot and said bearings.

4. The waste water treatment system as set forth in claim 3, wherein the lower end of said louver (34) is extended downwardly past said pivot (346) and said bearings.

5. The waste water treatment system as set forth in any one of the preceding claims, wherein said water channel switcher (3) comprises furthermore a separator (36) made of a resilient material and provided between said outlets extending over said louver (34) and between said casing (35a, 35b) and the side walls (341, 342) of said louver (34).

## Patentansprüche

1. Ein Abwasseraufbereitungssystem einschließlich eines Abfallzerkleinerers (2) und eines Wasserkanalschalters (3), der mit einer Leitung (21) verbunden ist, damit Abwasser aus einer Küchenspüle (11) und Abfall enthaltendes Wasser aus einem Abfallzerkleinerer (2) dort hindurch laufen kann, und das angepasst ist, um das Abfall enthaltende Wasser zu einer Abwasseraufbereitungsvorrichtung (4) zu leiten, wenn der Abfallzerkleinerer (2) eingeschaltet wird, aber ansonsten Abwasser von der Spüle zu einer Schmutzwasserleitung (32) zu leiten, wobei
der Wasserkanalschalter (3) eingeschaltet bzw. abgeschaltet wird, wenn der Abfallzerkleinerer (2) eingeschaltet bzw. abgeschaltet wird, wobei
der Wasserkanalschalter (3) einen Rücksetzmechanismus (33) aufweist, um den Wasserkanalschalter anzutreiben, das Abwasser zu der Schmutzwasserleitung zu leiten, wenn der Schalter (3) abgeschaltet wird;
wobei der Wasserkanalschalter (3) ein Gehäuse (35a, 35b) beinhaltet, das an seinem oberen Ende einen Einlass zum Aufnehmen des Abwassers, und an einem Ende der Unterseite des Gehäuses einen Schmutzwasserauslass (351) und an dem anderen Ende der Unterseite des Gehäuses einen Abwasseraufbereitungsauslass (352) aufweist;
eine zentrale Klappe (34), die zwischen den Auslässen zum Schalten des Flusses des Abwassers zu entweder dem Schmutzwasserauslass oder dem Abwasseraufbereitungsauslass montiert ist;
elektrische Mittel (33) zum Antreiben der Klappe, um das Abwasser zu dem Abwasseraufbereitungsauslass zu leiten;
**gekennzeichnet dadurch, dass** die Klappe (34) Seitenwände (341, 342) aufweist, die auf gegenüberliegenden Enden der Klappe bereitgestellt sind und sich entlang der Innenseite des Gehäuses erstrecken.

2. Abwasseraufbereitungssystem gemäß Anspruch 1, wobei das Gehäuse aus einem rechten und einem linken Gehäuse gebildet ist, von denen jedes einen Flansch (357) aufweist, wobei die Flansche miteinander gekoppelt sind, um das rechte und das linke Gehäuse zu integrieren.

3. Abwasseraufbereitungssystem gemäß einem der vorhergehenden Ansprüche, wobei die Klappe (34) ein Drehgelenk (346) an dem unteren Ende davon aufweist, das in den auf den Wänden des Gehäuse gebildeten Lagern gestützt wird; und
ein Spoiler (343) auf der Klappe (34) gebildet ist, die das Drehgelenk und die Lager abdeckt.

4. Abwasseraufbereitungssystem gemäß Anspruch 3, wobei sich das untere Ende der Klappe (34) nach unten an dem Drehgelenk (346) und den Lagern vorbei erstreckt.

5. Abwasseraufbereitungssystem gemäß einem der vorhergehenden Ansprüche, wobei der Wasserkanalschalter (3) des Weiteren eine Trennvorrichtung (36) beinhaltet, die aus einem elastischen Material gefertigt ist und zwischen den Auslässen bereitgestellt ist, die sich über die Klappe (34) und zwischen dem Gehäuse (35a, 35b) und den Seitenwänden (341, 342) der Klappe (34) erstreckt.

## Revendications

1. Un système de traitement des eaux usées incluant un broyeur de déchets (2) et un commutateur de conduite d'eau (3) raccordé à une canalisation (21) pour passer à travers celle-ci des eaux usées provenant d'un évier de cuisine (11) et des eaux contenant des déchets provenant d'un broyeur de déchets (2), et étant adapté pour conduire lesdites eaux contenant des déchets jusqu'à un appareil de traitement des eaux usées (4) lorsque ledit broyeur de déchets (2) est activé mais autrement pour conduire lesdites eaux usées de l'évier à une canalisation d'égout (32), dans lequel
ledit commutateur de conduite d'eau (3) est activé et désactivé alors que ledit broyeur de déchets (2) est activé et désactivé, respectivement, dans lequel
ledit commutateur de conduite d'eau (3) a un mécanisme de retour (33) destiné à forcer ledit commutateur de conduite d'eau de façon à conduire lesdites eaux usées jusqu'à ladite canalisation d'égout lorsque ledit commutateur (3) est désactivé ;
ledit commutateur de conduite d'eau (3) comprenant un boîtier (35a, 35b) ayant au niveau de l'extrémité supérieure de celui-ci une entrée destinée à recevoir lesdites eaux usées, et au niveau d'une extrémité du dessous dudit boîtier une sortie d'égout (351), et au niveau de l'autre extrémité du dessous dudit boîtier une sortie de traitement des eaux usées (352) ;
un louvre pivotant (34) monté entre lesdites sorties pour faire commuter l'écoulement desdites eaux usées vers soit ladite sortie d'égout, soit ladite sortie de traitement des eaux usées ;
un moyen électrique (33) destiné à entraîner ledit louvre de façon à conduire lesdites eaux usées jusqu'à ladite sortie de traitement des eaux usées ;
**caractérisé en ce que** ledit louvre (34) a des parois latérales (341, 342) fournies sur les extrémités opposées dudit louvre et s'étendant sur l'intérieur dudit boîtier.

2. Le système de traitement des eaux usées tel qu'exposé dans la revendication 1, dans lequel ledit boîtier est formé d'un boîtier droit et d'un boîtier gauche, ayant chacun un flasque (357), lesdits flasques étant couplés ensemble pour intégrer ledit boîtier droit et ledit boîtier gauche.

3. Le système de traitement des eaux usées tel qu'exposé dans n'importe quelle revendication précédente, dans lequel ledit louvre (34) a un pivot (346) au niveau de l'extrémité inférieure de celui-ci en appui sur des paliers formés sur les parois dudit boîtier ; et
un déporteur (343) est formé sur ledit louvre (34) recouvrant ledit pivot et lesdits paliers.

4. Le système de traitement des eaux usées tel qu'exposé dans la revendication 3, dans lequel l'extrémité inférieure dudit louvre (34) est étendue vers le bas au-delà dudit pivot (346) et desdits paliers.

5. Le système de traitement des eaux usées tel qu'exposé dans n'importe laquelle des revendications précédentes, dans lequel ledit commutateur de conduite d'eau (3) comprend en outre un séparateur (36) réalisé en un matériau résilient et fourni entre lesdites sorties s'étendant par-dessus ledit louvre (34) et entre ledit boîtier (35a, 35b) et lesdites parois latérales (341, 342) dudit louvre (34).
